# EUROPEAN PATENT SPECIFICATION

(11) **EP 0 520 667 B1**
(45) Date of publication and mention of the grant of the patent: **14.10.1998**
(21) Application number: 92305500.8
(22) Date of filing: 16.06.1992
(51) Int. Cl.: H01M 4/58, H01M 4/96

(54) **Carbon anode for secondary battery**
Kohlenstoffanode für Akkumulator
Anode en charbon pour accumulateur

(30) Priority: 17.06.1991 JP 144547/91
(43) Date of publication of application: 30.12.1992
(73) Proprietor: SHARP KABUSHIKI KAISHA, Osaka (JP)
(72) Inventor: Tanaka, Hideaki, Nara-shi, Nara-ken (JP); Mitate, Takehito, Kitakatsuragi-gun, Nara-ken (JP); Kitayama, Hiroyuki, Kitakatsuragi-gun, Nara-ken (JP); Yamada, Kazuo, Kitakatsuragi-gun, Nara-ken (JP)
(74) Representative: West, Alan Harry

(56) References cited:
- EP-A- 328 131
- EP-A- 517 070
- WO-A-90/13924
- DE-A- 1 903 349
- PATENT ABSTRACTS OF JAPAN vol. 16, no. 267 (E-1217)16 June 1992 & JP-A-4 061 747 ( NIPPON STEEL CORP. ) 27 February 1992

## Description

The present invention relates to an anode for a secondary battery employing carbon as an active material.

Graphite forms an intercalation compound which has regularly stacking layers. By virtue of this structure, graphite has been studied as an anode for a secondary battery. It has been found that for graphite to be used in an electrolyte, for example, the preferred carbon material is of low crystallinity, such as the carbon material (described in Japanese Laid Open Patent No. 24555/1988) obtained by pyrolytically decomposing a hydrocarbon in the vapor phase, having a turbostratic structure and peculiar orientation.

However, when the carbon material is of low crystallinity, the battery potential varies greatly during discharge. Because of the reduced capacity of the anode, it is difficult to produce a battery of high capacity.

It has, in fact, been found that variations in potential are smaller and anode capacity is greater when the carbon material is of higher crystallinity. However, as the carbon crystallinity increases, it is supposed that charging efficiency is reduced as a result of decomposition first of the electrolyte, and then of the carbon structure (Electrochem. Soc., 117, 222, (1970)). Such reduction of charging efficiency is observed, for example, as a shoulder on the potential curve when plotting the variation in potential against the ratio of the amount of charge to the initial charge. The decomposition of the carbon structure is indicated by a reduction of charging cycle characteristics.

The present invention provides a carbon anode for a secondary battery, comprising a carbon active material having its surface of a low crystallinity carbon and a core of a high crystallinity carbon having interlayer spacing from 0.335 to 0.340 nm along the c-axis and an argon ion laser Raman spectrum peak height ratio at 1360cm⁻¹ and 1580cm⁻¹ of below 0.4.

The invention is described below in greater detail by way of example only with reference to the accompanying drawings, in which:
Fig. 1 is a plot of battery discharge characteristics;
Fig. 2 is a plot of charge preservation capacity; and
Fig. 3 is a schematic representation of apparatus used in making anodes according to the present invention.

In the present invention, the carbon active material of the anode is covered with a not entirely different substance but with carbon of lower grade structure, i.e. of lower crystallinity. The skin structure on the carbon surface is amorphous-like in having extremely low crystallinity and a small crystal size, and its orientation is rather disordered. This carbon structure is called a turbostratic structure. The core structure of the carbon shows high crystallinity and a comparatively large particle size.

Amorphous carbon is a carbon of low crystallinity, which includes laminate irregularities on the carbon surface, and an extremely small crystallite size formed of carbon atoms with and without sp² hybrid orbital bonding structures.

The carbon anode material of the invention preferably has a turbostratic structure in which an amorphous carbon has laminate irregularities on the carbon surface.

Carbon having the turbostratic structure has the following characteristics in its X-ray diffraction pattern.
1. The (001) diffraction pattern is broad and its position is shifted to a low angle as compared with graphite, i.e. the interlayer spacing is larger, tailing to the low angle side and showing an asymmetrical profile.
2. The (hk) diffraction is rather broad, sharply rising on the low angle side, long tailing to the high angle side and showing an asymmetrical profile.
3. No (hkl) diffraction is apparent.

It is preferred to employ a carbon material having a turbostratic structure which is manifested by an interlayer spacing along the c-axis from 0.337 to 0.360nm and a ratio of peak heights at 1360cm⁻¹ and 1580cm⁻¹ in an argon ion laser Raman spectrum from 0.4 to 1.0. More preferably, the interlayer spacing along the c-axis is from 0.343 to 0.355nm.

In addition, the above interlayer spacing along the c-axis is found from a diffraction angle of a peak position of the (001) diffraction.

Since the surface of the carbon anode material for the secondary battery has the above structure, a carbon material of higher crystallinity can be employed for the core. More specifically, it is possible to prevent reduction of charging efficiency and decomposition of the carbon structure, which is supposedly caused by decomposition of electrolyte when a carbon material of high crystallinity is employed. It is therefore preferred that the "amorphous" carbon covering the surface is as thin as possible, and the core is formed of a carbon of high crystallinity.

The carbon material has a high crystallinity, in which the interlayer spacing along the c-axis is from 0.335 to 0.340nm and the ratio of peak heights at 1360cm⁻¹ and 1580cm⁻¹ in an argon ion laser Raman spectrum is below 0.4. In addition, the interlayer spacing along the c-axis is found from a diffraction angle at a peak position of the (001) diffraction.

Thus, the inventors of the present invention have found that even when carbon having its core of high crystallinity and high charging efficiency but which is reduced by decomposition of electrolyte, is covered with an amorphous carbon and used as an anode active material of the secondary battery, such reduction in efficiency and decomposition do not occur.

These effects are more remarkable when the amorphous carbon has a turbostratic structure.

In addition, the discharge curve for such a battery exhibits hardly any variation in potential during discharge and the anode remains stable at low potentials.

The present invention will be described in detail below by reference to embodiments using an anode for a lithium secondary battery.

### Example 1

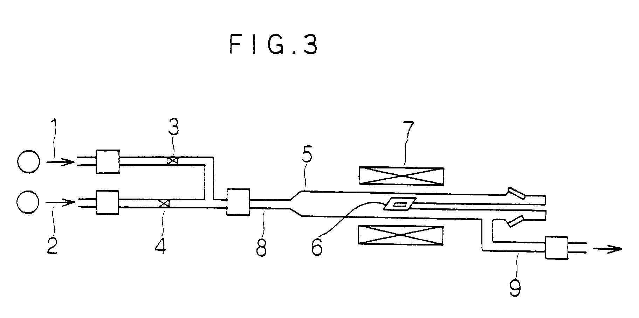

A carbon material was formed in an apparatus as shown in Fig. 3 of the drawings. First, 50mg of graphite powder (KS44 made by LONZA Ltd.) was placed in a holder 6 in a reaction tube 5 and then argon gas and propane gas were supplied from an argon supply line 1 and a propane supply line 2, respectively. The propane concentration of the gas supply was set to 10 mole % by adjusting needle valves 3 and 4. The flow velocity of the gas supply was set to 12.7 cm/min and the supply of propane was set to 0.05 mol/h. In addition, a hydrocarbon or derivative other than propane may be used as a raw material. More specifically, an aliphatic hydrocarbon, an aromatic hydrocarbon or an alicyclic hydrocarbon may be used. More specifically, methane, ethane, butane, benzene, toluene, naphthalene, acetylene, biphenyl and substitution products thereof may be used. In the reaction tube 5, the holder 6 was formed of a quartz plate and a heating furnace 7 was provided around the reaction tube 5. The holder 6 and the graphite powder were heated by the furnace 7 to approximately 750°C, whereby propane supplied from a pyrex tube 8 was pyrolytically decomposed and a pyrolysis carbon was deposited on the surface of the graphite in the holder 6. Residual gas after pyrolysis was removed by an exhaust system and the pyrolysis time was set to 2 hours. Thus, 80 mg of carbon powder was provided. In addition, for reference, carbon formed under the same conditions as above through the pyrolysis time of 30 minutes was also taken out. The crystallinity of both was evaluated in X-ray diffraction and Raman scattering. The results are shown in the following Table 1.

**Table 1**

| Pyrolysis time | d(nm) | R | Remarks |
|---|---|---|---|
| 30 minutes | 0.336 | 0.18 | Comparison |
| 2 hours | 0.338 | 0.54 | Low angle side : Broad |

35.1mg of carbon obtained over a 2-hour pyrolysis time was mixed with 5wt% polyolefin binder and then hot pressed on a nickel mesh at 120°C under a pressure of 400kg/cm². The resulting pellet had a diameter of 15mm and constituted an electrode A.

### Example 2

A carbon material was deposited under the same conditions and in the same apparatus described in Example 1 above using a nickel powder (200 mesh) as the substrate. The results of evaluation of the structure of the carbon thus obtained are shown in the following Table 2. Crystallinity is high during the initial stage of deposition because of nickel catalysis. On the surface, there is no catalyst effect and the surface is covered with an amorphous carbon having a turbostratic structure which is characteristic of pyrolysis carbon.

**Table 2**

| Pyrolysis time | d(nm) | R | Remarks |
|---|---|---|---|
| 30 minutes | 0.337 | 0.28 | Comparison |
| 2 hours | 0.338 | 0.49 | Low angle side : Broad |

An electrode B was produced from the carbon obtained over an approximate 2-hours pyrolysis time, in the same manner as electrode A.

Although the electrodes produced are formed of a composite of carbon particles, in which the core is of high crystallinity and the skin is of amorphous particles, it is also possible to form a composite of carbon layers in which an inner layer is made of high crystallinity carbon on a metal substrate and an outer layer is covered with thin amorphous carbon.

### Comparative Example 1

A carbon material was made in the same manner as that of Example 2 except that quartz was used as a substrate for deposition. An electrode C was made in the same manner as that of Example 1. The result of evaluation of the carbon is shown in the following Table 3. It was not found that the carbon has a turbostratic structure.

**Table 3**

| Pyrolysis time | d(nm) | R | Remarks |
|---|---|---|---|
| 30 minutes | 0.346 | 0.74 | Broad |
| 2 hours | 0.346 | 0.75 | Broad |

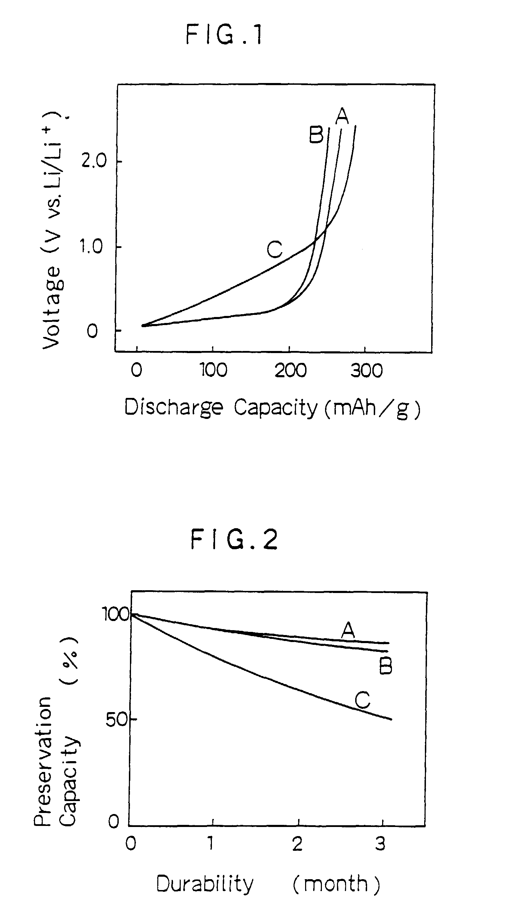

Charging and discharging tests were performed on all three electrodes using propylene carbonate solution containing 1M lithium perchlorate in a three-electrode cell in which Li was a cathode and Li/Li⁺ was a reference electrode. The discharge curves during the fifth cycle are shown in Fig. 1 of the accompanying drawings.

It is found that variation in potential during discharge is great and battery capacity is small when the carbon material is of low crystallinity, while the variation in potential is small and the battery capacity is great when the carbon material is of high crystallinity.

In addition, when graphite (KS44 made by LONZA Ltd.) is used as the electrode, charging is almost impossible but initial charging efficiency is not reduced and the electrode is not decomposed (electrode A).

It is found also that a carbon material covered with an amorphous particle surface, in which the active material on the carbon surface is in contact with an electrolyte, may be used as an anode when an organic electrolyte is used. More preferably, the carbon material has a turbostratic structure having irregularities on the carbon surface. In addition, it is preferred that the carbon material having the turbostratic structure has an interlayer spacing along its c-axis from 0.337 to 0.360nm and the ratio of the peak heights at 1360cm⁻¹ and 1580cm⁻¹ in an argon ion laser Raman spectrum is 0.4 to 1.0. More preferably, the interlayer spacing along the c-axis is from 0.343 to 0.355nm. In addition, the interlayer spacing along the c-axis is found from a diffraction angle at a peak position of the broad (001) lattice diffraction. The above effect is confirmed through many experiments using lithium as dopant.

The respective electrodes A, B and C were charged with a constant current to 0V vs. Li/Li⁺ and then stored for three months. Thereafter, the capacity of each stored electrode was measured; the results are shown in Fig. 2. It was found that self-discharge of the electrodes A and B was small.

As can be seen from the above results, the electrode comprising the carbon material of high crystallinity having an interlayer spacing along the c-axis from 0.335 to 0.340nm and a ratio of the peak heights at 1360cm⁻¹ and 1580cm⁻¹ in an argon ion laser Raman spectrum of 0.4 or less, having a discharge curve showing many plateaus in which there is almost no variation in potential during discharge, is stable at low potentials and its self-discharging activity is small.

In addition, the carbon material in accordance with the present invention can be made by soaking graphite particles in liquid such as tar or pitch and then firing.

As described above, according to the present invention, solvent is prevented from decomposing on an electrode surface, the carbon structure is prevented from decomposing and carbon material of high crystallinity can be used, whereby the charge and discharge capacity can be increased at a low potential. As a result, there is provided an anode for a lithium secondary battery which is superior in cyclic characteristics.

## Claims

1. A carbon anode for a secondary battery, comprising a carbon active material having its surface of a low crystallinity carbon and a core of a high crystallinity carbon having an interlayer spacing from 0.335 to 0.340 nm along the c-axis and an argon ion laser Raman spectrum peak height ratio at 1360cm⁻¹ and 1580cm⁻¹ of below 0.4.

2. A carbon anode according to claim 1, wherein the low crystallinity carbon has a turbostratic structure.

3. A carbon anode according to claim 2, wherein the carbon having a turbostratic structure has an argon ion laser Raman spectrum peak height ratio at 1360cm⁻¹ and 1580cm⁻¹ of 0.4 to 1.0.

4. A carbon anode according to any one of claims 1 to 3, wherein the battery is a lithium secondary battery.

## Patentansprüche

1. Kohlenstoffanode für eine Sekundärbatterie, umfassend ein aktives Kohlenstoffmaterial mit einer Oberfläche aus einem niederkristallinen Kohlenstoff und einem Kern aus einem hochkristallinen Kohlenstoff mit einem Zwischenschichtabstand von 0,335 bis 0,340 nm entlang der c-Achse und einem Verhältnis der Peakhöhen bei 1360 cm⁻¹ und 1580 cm⁻¹ im Argonionenlaser-Ramanspektrum von weniger als 0,4.

2. Kohlenstoffanode gemäß Anspruch 1, worin der niederkristalline Kohlenstoff eine turbostratische Struktur aufweist.

3. Kohlenstoffanode gemäß Anspruch 2, worin der Kohlenstoff ein Verhältnis der Peakhöhen im Argonionenlaser-Ramanspektrum bei 1360 cm⁻¹ und 1580 cm⁻¹ von 0,4 bis 1,0 aufweist.

4. Kohlenstoffanode gemäß mindestens einem der Ansprüche 1 bis 3, worin die Batterie eine Lithiumsekundärbatterie ist.

## Revendications

1. Anode en carbone pour batterie d'accumulateurs comprenant un matériau réactif formé de carbone, dont la surface est formée de carbone présentant une faible cristallinité et dont le coeur est formé par un carbone ayant une haute cristallinité, avec un espacement entre couches compris entre 0,335 et 0,340 nm le long de l'axe c et un rapport des hauteurs des pics du spectre Raman d'un laser à ions argon à 1360 cm⁻¹ et à 1580 cm⁻¹ inférieur à 0,4.

2. Anode en charbon selon la revendication 1, dans laquelle le carbone de faible cristallinité possède une structure turbostratique.

3. Anode en carbone selon la revendication 2, dans laquelle le carbone possédant une structure turbostratique possède un rapport des hauteurs des pics du spectre Raman d'un laser à ions argon à 1360 cm⁻¹ et à 1580 cm⁻¹ compris entre 0,4 et 1,0.

4. Anode à carbone selon l'une quelconque des revendications 1 à 3, dans laquelle la batterie est une batterie d'accumulateurs au lithium.
